# EUROPEAN PATENT SPECIFICATION

(11) **EP 1 334 316 B1**
(45) Date of publication and mention of the grant of the patent: **08.02.2006**
(21) Application number: 01981225.4
(22) Date of filing: 26.10.2001
(51) Int. Cl.: F24F 13/10, F24F 13/00, F24F 11/04, F24F 13/24, F16K 3/24

(54) **VALVE FOR VARIABLE FLOWS, FIRE DAMPER AND COMBINED FIRE DAMPER AND VALVE FOR VARIABLE FLOWS**
VENTIL FÜR VARIABLE STRÖMUNGEN, FEUERKLAPPE UND KOMBINIERTE FEUERKLAPPE UND VENTIL FÜR VARIABLE STRÖMUNGEN
CLAPET DESTINE A DES ECOULEMENTS VARIABLES, REGISTRE COUPE-FEU, ET COMBINAISON DE CE CLAPET ET DE CE REGISTRE AUX FINS D'OBTENTION D'ECOULEMENT VARIABLES

(30) Priority: 26.10.2000 SE 0003886; 14.11.2000 SE 0004146
(43) Date of publication of application: 13.08.2003
(73) Proprietor: Lindinvent AB, 227 70 Lund (SE)
(72) Inventor: LINDBORG, Herman, S-240 10 Dalby (SE)
(74) Representative: Lindberg, Olle Nils Olof
(86) International application number: PCT/SE2001/002358
(87) International publication number: WO 2002/035156

(56) References cited:
- EP-A2- 0 385 250
- DE-A1- 2 105 077
- SE-B- 442 669
- SE-C2- 500 402
- SE-C2- 513 616
- US-A- 4 397 223
- US-A- 5 154 666

## Description

### Field of the invention

The present invention relates to a valve for variable flows, and particularly to a valve adapted to adjust the air-flow with little work resistance for the valve. Furthermore, the invention relates to a valve, which can provide very small air-flows with a limited generation of noise, and provide cooled air without problems with cold air dropping down.

### Background

Many properties, for instance private houses and offices, are today devised with built-in ventilation systems in order to provide a better in-door climate for the residents and employees. In many present ventilation systems the air-flow is however the same independent of the need for ventilation, that is independent of if e.g. a room is filled with people or not. These ventilation systems therefor cause unnecessary consumption of energy and raised energy costs. In order to satisfy the demands of the future of lowered energy costs the air-flow has to be reduced extensively when people are not present. The flow has to be adjusted to the real need for ventilation but at the same time satisfy the hygiene limits regarding temperature, CO₂ concentration, draft and a low sound level. By providing cooled air (16-17 °C) in a way that does not cause a resulting draft, in combination with controlling of the energy supply to heat radiators at the windows means that it is possible to obtain an optimal solution for the in-door climate throughout the year. This way excess heat from people, computers and incoming sunlight can be controlled without the need for cooled baffles or large amounts of air. This brings about that supply air terminals must be able to spread the cooled air in a way that does not cause a draft and does not cause the sound level to exceed given limits when the flow is reduced to a minimum of a few litres per second.

Among the ventilation systems known today there is no system capable of meeting the requirements above. In many ventilation systems the air-flow is adjusted for instance by means of a conventional damper, such as a throttle valve. When reducing the air-flow in these systems a significant pressure difference occurs over a very short distance at the edge of the plate, which gives rise to a considerable amount of turbulence, i.e. a powerful sound is generated over the edge of the plate. In order to lower the sound level in the room to an acceptable level, i.e. to approximately 30 dB(A), a silencer is therefore needed. Furthermore, a throttle damper cannot reduce the air-flow efficiently since there will be a small open gap between the plate and the housing of the damper even in a closed state. There are throttle dampers arranged with a rubber sealing but these are not advantageous to use since they demand actuators with high torque.

If a conventional supply air terminal, devised for stationary flows, is used together with a throttle damper in order to obtain ventilation adaptable to the current need using cooled air, the air-speed in the terminal would be so low at small flows that a cold air dropping effect will occur, i.e. that air pours out of the ventilation system without being spread in an adequate manner in the room. This is a problem for instance in certain conference installations were conference participants placed in the vicinity of the ventilation device experience that cold air is blown upon them, whereas participants located at a distance from the device will not experience any ventilation at all. Consequently, this is an effect of the air not being spread in an optimum way.

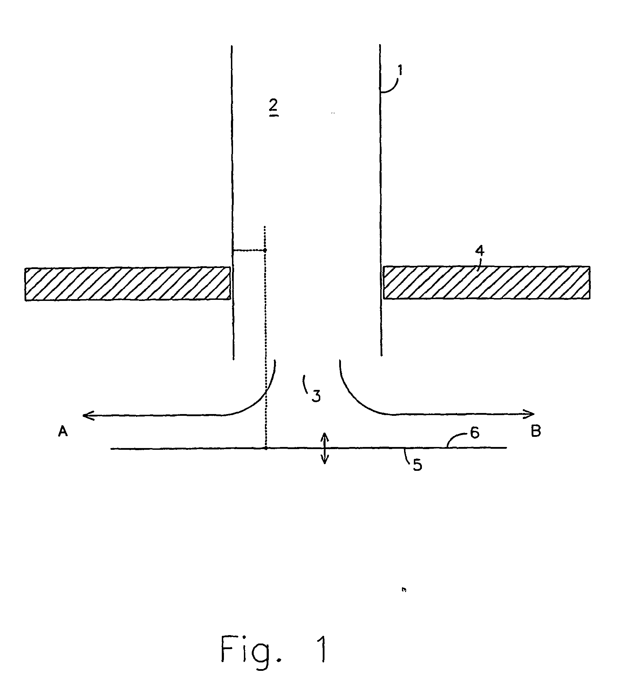

Another example of the prior art technique is shown in figure 1. The valve in this device comprises a tube 1 with a conduit 2 for input of air, preferably arranged with an output orifice 3 at a ceiling 4. A flow reducing device 5 is further devised with a surface 6 facing a orifice 3 of the tube. The supply flow of air through the tube 1 mainly occurs in the directions of arrows a and b. The air-flow is adjusted by raising or lowering the flow reducing device 5, which is illustrated by the bidirectional arrow in the figure, for opening of the gap between the surface 6 and the orifice 3. A dashed line in the figure illustrates that the flow reducing device 5 in some way is fixed to the tube 1 or to the ceiling 4, and is adjustable in different height positions. Actuators for adjusting the air-flow can be applied with some form of driver means, wherein the position preferably is adjusted by means of pneumatics under control of mechanical temperature sensors. In a simpler embodiment the actuator can be manually adjustable, for instance constituted by a screw in an oblong hole. A disadvantage with the device according to figure 1 is that a flow regulation is carried out with a pressure from a supply air acting towards the adjustable flow reducing device 5. When reducing the flow, i.e. when the flow reducing device 5 is brought towards the orifice 3, the flow reducing device will hence work towards the air pressure present in the air conduit in the tube 1, caused by both static and dynamic pressure. This means that a certain force will be needed for reducing the flow, and that for dynamic adjustment an engine is needed which engine is devised such that it is capable of exercising the necessary work. However, it is desirable that said engine is as quite as possible, since it is placed inside an office facility or the like, and is adjusted dynamically dependent on certain given parameters. At the same time, one realises that the higher work the engine has to exercise, the more sound is generated. Another disadvantage with the solution according to figure 1 is that, as with a throttle damper, or an iris damper for that matter, reduction is achieved in one point, or rather at the verge of the orifice 3. A large reduction with very small air-flows, i.e. when the plate is upraised, therefore brings about an increased sound level because of the turbulence which is formed alongside the edges of the orifice 3 during the powerful pressure change. In order to avoid this the distance between the tube 1 and the flow reducing device 5 is usually limited by use of spacers, wherein the air-flow cannot be completely reduced. Hence, the air-flow cannot be completely adjusted based on the need for ventilation, wherein it is hard to obtain the desired saving effects.

SE 442669 discloses a supply air terminal wherein a cone-shaped flow reducing device is arranged to be brought closer or farther away from an inlet tube opening for the purpose of regulating the flow. The disclosed solution uses the same principles as the prior art according to figure 1, and hence suffers from the same drawbacks. This document also forms the basis for the preamble of claim 1.

DE 2105077 relates to a self-regulating valve for constant flows, adapted to compensate for variations in the input air pressure. A spring mechanism is used such that in case of a pressure drop in the input air the damper opening is regulated in order to help maintain a steady flow.

SE 516616 discloses an air distributor, devised to be manually operated to direct the divergence of the output beam of air. A blade ring is mounted in a stationary position in relation to an outermost tube which includes a collar. In the air distributor there is a displaceable separate cylinder pipe which is used for guiding air and which can be brought into different regulation positions in relation to the stationary blade ring. The apparatus is not devised for, nor capable of, regulating the output flow, but is devised to control the divergence of the output beam by displacing the separate cylinder pipe such that a variable portion of the input air is passed through the blade ring, an a complementing portion is passed outside the separate cylinder pipe.

Another problem associated with ventilation systems of the prior art is the implementation of fire dampers. In order to prevent smoke and hot gases from spreading in the ventilation system, causing damage or potentially spreading a fire, basically every ventilation system of today is devised with some form of shut-off function in the form of fire dampers. Therefore, both a flow regulating device and a fire damper is usually located in the same duct, since no satisfying solution to combine the two has been provided. A fire damper must be capable of completely closing off the duct, which means that if a throttle valve is used it has to be provided with a rubber sealing around its damper blade. The drawbacks of such a device are many due to the friction caused. Both the rubber sealing and the actuator, which is often exercised every day in order to check its function, will become worn out prematurely, and the closing speed of the fire damper will be slow due to the dry friction.

US 4,397,223 relates to a reciprocating actuator for a valve in the form of an air diffuser. The actuator is devised to react to fire or high heat, and to close the valve in such case. Since the spring used to close the valve in case of the aforementioned situations has to work against the air pressure in the connecting pipe, a latch mechanism has been provided to prevent the valve from opening in case the pressure exceeds the closing force of the spring.

The present invention relates to a valve which fulfils the requirements above and which does not display the disadvantages associated with the prior art.

### Summary of the invention

Consequently, the invention relates to a fluid valve for variable flows of for example air, comprising a tube with an input end and an output end, a flow reducing device having a damping surface facing said output end for adjustment of the air flow through said tube, and an actuator for variable adjustment of the distance between the damper surface of flow reducing device and said output end. The valve is characterised in that the tube comprises a dynamic tube member with open ends, slideably arranged concentrically with a stationary tube member, wherein said actuator is devised to displace said dynamic tube member along the stationary tube member for adjustment of the distance between said output opening and said damper surface.

An advantage with the valve according to the present invention is that it needs very small actuator forces, since the element which is moved upon opening and closing of the valve is a tube member with open ends which is displaced in its axial direction. Thereby the air pressure will only work radially outwards against the envelope surface of the tube member, but will not counteract the movement of the tube member. Therewith a small engine can be used with a low input effect so that it will operate quietly and with small power consumption.

Preferably said flow reducing device is arranged with spacer bars on a fixed distance from said stationary tube member.

The actuator preferably includes a driver means and a transmission devised to transfer a momentum in said driver means to an axial displacement of said dynamic tube member in relation to the stationary tube member.

Said driver means is preferably devised at said flow reducing device, wherein said transmission links the driver means with said dynamic tube member.

The transmission preferably includes a threaded rod which extends into said dynamic tube member, which rod is rotatable by means of said driving means and is arranged in threaded engagement with a nut member mounted firmly to the dynamic tube member, wherein the actuator, by rotation of the rod, is devised for adjustment of said axial displacement.

Said nut member is preferably fixed centrally in the conduit of the dynamic tube member with one or more fixation bars.

Said driving means preferably includes a DC current engine.

An isolation carpet is preferably arranged on said surface of the flow reducing device facing the output end of the dynamic tube member, alternatively on a surface of the dynamic tube member at its output end which faces said damper surface.

A stationary pressure reducing element is preferably arranged in the inner conduit of the tube, which stationary pressure reducing element defines a decreased cross sectional area for the tube conduit over an extended length of the conduit.

The stationary tube member preferably has a mounting flange at the end of the stationary tube member directed towards said output end, devised for mounting against a surface around a ventilation opening in said surface. Alternatively, said stationary tube member may be devised, in said end directed towards the output end, for mounting to a second tube.

In a preferred embodiment a dynamic tube member has an outer damper flange, projecting at said output end. Said damper flange preferably has a flange surface extending between the edge of the output end of the tube and the outer edge of the damper flange, wherein a flow distance is defined between said flange surface and said damper surface. In one embodiment said flange surface and said damper surface are substantially parallel, alternatively the distance between said flange surface and said damper surface decreases from the edge of the output end to said outer edge.

In one embodiment said damper surface extends substantially perpendicularly to the axis of the tube. In an alternative embodiment said damper surface displays a partly conical shape along the axis of the tube, tapering towards said output end. In an embodiment having a damper flange said damper flange is, in such an embodiment, essentially funnel-shaped with a top angle corresponding to the conically shaped damper surface.

### Brief description of the drawings

The present invention will be described in greater detail below with reference to the accompanying drawings, in which
Fig 1 shows a valve for variable flows according to the prior art;
Fig 2 shows an embodiment for a valve for variable flows according to the present invention;
Fig 3 shows a different embodiment of the valve according to the present invention, devised with a damper flange;
Fig 4 shows an embodiment of the invention with the funnel-shaped output opening;
Fig 5 shows an embodiment of the invention, adapted for mounting between two tubes;
Fig 6 shows an embodiment of the invention, devised with a stationary pressure reducing element 34 for nominal reduction of the air flow.

### Detailed description of preferred embodiments

The present invention relates to a valve for variable air flows which is capable of reducing the air-flows without having to work against the air pressure, and which by minimising turbulence effects during damping furthermore sustains the air speed so that dropping cold air does not occur, and the sound generation is minimised.

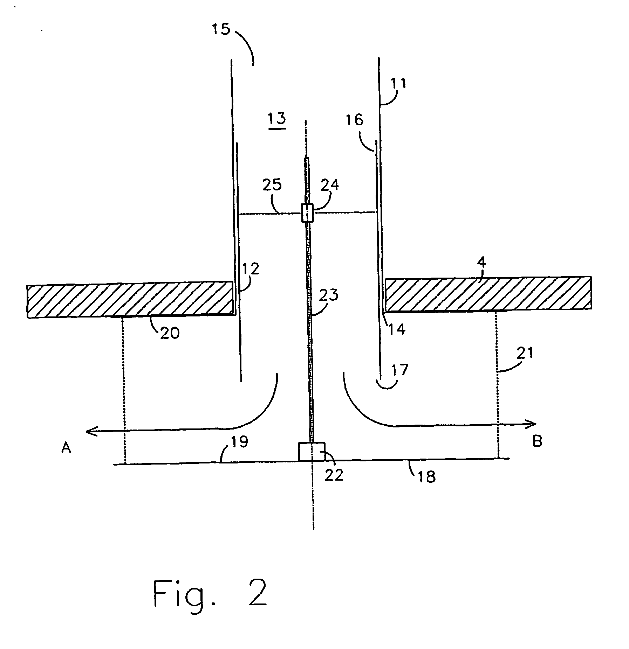

In figure 2 a valve is shown comprising a tube 11,12 arranged e.g. at the ceiling 4 of a room, which tube 11,12 forms a conduit 13 for flow of air. The tube comprises a first stationary tube member 11, preferably firmly arranged towards said ceiling 4 at the first open end 14 of the tube member. An open input end 15 is arranged at the second end of the tube member 11, arranged for connection to a ventilation system (not shown) for supply of air. Hence, the valve is devised for flow of air from said input end 15, through the conduit 13, and out through said output opening 14.

In the valve according to the present invention, said tube 11,12 further comprising a second, dynamic tube member 12, arranged axially displaceable at the first tube member 11. Preferably the dynamic tube member 12 is arranged inwardly of the first tube member 11, as disclosed in figure 2, therefore having an outer diameter which does not exceed the inner diameter of the stationary tube member 11. In an alternative embodiment the dynamic tube member 12 may however be arranged outwardly of the stationary tube member 11. Said dynamic tube member 12 also includes an input end 16, facing the same direction as input end 15 of the stationary tube member, and an output end 17 turned towards the output end 14 of the stationary tube member, respectively. The output end 17 of the dynamic tube member 12, which furthermore constitutes the output end of said tube 11,12, extends outside the output end 14 of the stationary tube member 11 to a different extent in dependence of the damping of the valve. The output end 14 of the stationary tube member is in one embodiment adapted for fixed mounting onto the ceiling, or in a wall. In one embodiment of the valve according to the invention, wherein the dynamic tube member 12 is devised inwardly of the stationary tube member 11, said output end 14 is devised with an outer mounting flange 20, adapted for mounting towards the ceiling or the wall with suitable fastening means, such as screws, rivets, glue or the like.

Furthermore, the valve comprises a flow reducing device 18 for regulation of the air flow out from the tube 11,12. Said flow reducing device 18 displays a surface 19 towards said output end 17 of the tube 11,12. The surface 19 will hence force air from the tube 11,12 to flow out sideways in the direction of the arrows A and B wherein the ventilation air will be guided out and spread in the room. It should be noted that the tube 11,12 and flow reducing device 18 in the valve according to the present invention each has a certain cross section, though not evident from the figure, and that the valve can be arranged for discharge of air through the entire circumference of the opening of said output end 17. The cross section is preferably circular, but may of course just as well be triangular, square or of any other shape.

The flow reducing device is stationary, and is preferably firmly attached to the stationary tube member 11 by means of spacer bars 21, which spacer bars define the maximum distance d which the second displaceable tube member 12 can be displaced out of the stationary tube member 11. As is evident from arrows A and B the spacer bars 21 shall not be seen as hindering the air flow, but rather forming discrete support means.

In the valve according to the invention the air flow is varied by using an actuator to vary the distance between the output end 17 of the dynamic tube member 12 and the surface 19 of the flow reducing device 18, wherein a linear relation is obtained between the actuator setting and the air flow out of the valve. The present air pressure in the conduit 13 acts radially outwards towards the walls of the dynamic tube member 12. However, apart from certain friction neither the static pressure caused by overpressure in the input air through the input opening 16, nor the dynamic pressure caused by the air flow itself, acts with any force on the dynamic tube member 12 in the axial direction. This means that control of the damping can be made with very little force, which in turn means that both the effect required by driving means 22 arranged for the actuator, and the sound it generates, can be minimised.

In its simplest embodiment the actuator is a device arranged to set the dynamic tube member 12 at different distances from the surface 19 of the flow reducing device 18. In a simple way this may be achieved by the dynamic tube member 12, being devised with a certain friction in the stationary tube member 11, for example caused by an intermediate O-ring. The dynamic tube member 12 may then be displaced into or out of the stationary tube member 11, for example manually, and then be retained in the selected position by means of said friction.

In an embodiment of the valve according to the invention, also illustrated in figure 2, the actuator is automated and devised with driving means 22 at the flow reducing device 18. Said driving means 22 is arranged to use low speed to achieve a high torque, and is for example constituted by a DC engine, but any other driving means, such as step engine or pneumatic engine may also be used. The driving means 22 of the actuator is devised to displace the dynamic tube member 12 by means of a suitable transmission 23,24,25 in relation to the flow reducing device 18 for regulation of the flow through the valve. In the illustrated embodiment the transmission of the actuator comprises a rod 23 with an outer thread, which rod extends inside the dynamic tube member 12 along its extension axis, preferably centrally in the conduit 13. Said rod 23 is rotatable by means of said driving means 22. Furthermore, a nut member 24 having an inner thread is arranged centrally in the dynamic tube member 12, preferably connected to the dynamic tube member 12 by means of one or more fixation bars 25 which do not influence the air stream through the conduit 13 in any substantial way. The rod 23 is arranged through the nut member 24 in the threaded engagement. The transmission 23,24,25 is arranged such that rotation of the rod 23 does not cause rotation of the dynamic tube member 12. By rotation of the rod 23, by means of the driving means 22 of the actuator, the dynamic tube member is thereby brought, through displacement forces acting on the threads of the nut member 24, to be displaced into or out of the stationary tube member 11, away from or towards the surface 19 of the flow reducing device 18. In this way the damping, i.e. the distance between the output opening 17 and the surface 19, is controllable. Only when the gap between the output end 17 and surface 19 of the flow reducing device 18 is very small, that is near closure, the air pressure will have influence of the dynamic tube member 12 in its axial direction, and then only caused by the dynamic pressure.

In an alternative embodiment the inside of the stationary tube member 11 and the outside of the dynamic tube member 12 are threaded, and engaged by these threads. By rotation of the dynamic tube member 12 it is easily displaceable towards or away from the flow reducing device 18 for increased or decreased damping. The setting of the damping may be manual, but it is likewise possible to arrange an actuator with driving means 22 for such a construction, in order to operate the rotation of the dynamic tube member 12.

In the figures showing the present invention the dynamic tube member 12 is drawn at a distance inside the stationary tube member 11 in order to simplify the figure. The radial distance between the tube members 11 and 12 is however as a rule small enough to prevent air passage between the tube members 11 and 12, and at the same time large enough for the dynamic tube member 12 to be easily displaceable in both directions inside the first tube member 11 in a way that provides minimum friction, unless the friction has a purpose of itself according to a previously described embodiment.

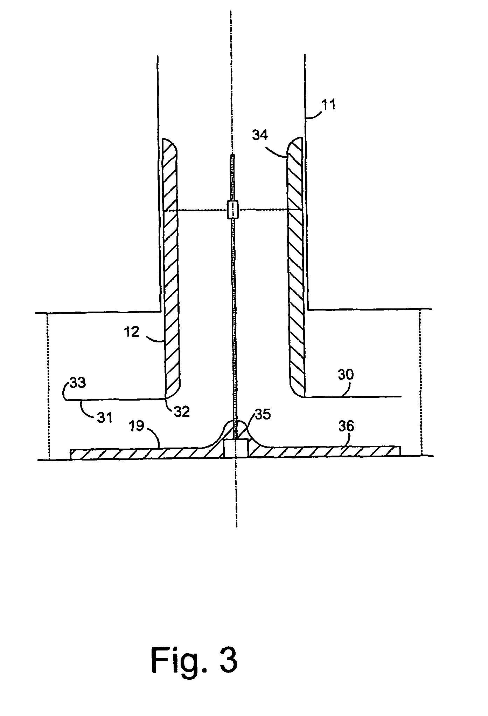

In figure 3 a preferred embodiment is shown comprising all elements from figure 2, although not all details are illustrated and references for some elements are left out in figure 3. In the embodiment according to figure 3 the dynamic tube member 12 has an outer damper flange 30, extending from the dynamic tube member 12 essentially parallel to the surface 19 of the flow reducing device 18, which damper flange 30 forms a wing on the outside of the output end 17 of the dynamic tube member 12. Since the dynamic tube member 12 is displaced perpendicularly towards the surface 19 on the flow reducing device 18, the angle between the flange surface 31 which the flange 30 faces towards the damper surface 19 of the flow reducing device 18, and said damper surface 19, remains constant regardless of the flow setting.

The embodiment including a damper flange 30 extending essentially parallel to the upper surface 19 is based on the inventors' conviction that an optimum flow reduction with a minimum generation of sound is one that is caused by an extended damping, similar to the narrow passage in a hose. In such a narrow passage the constant friction towards the walls of the hose gives rise to a pressure fall between the input end and the output end, wherein the pressure falls evenly between said ends. Sharp edges, on the other hand, were a sudden drop in pressure is generated, such as for instance in a throttle valve, lead to substantial turbulence which causes both noise and an under-pressure which counteracts the force which has to be applied on the damper during throttling. By the arrangement according to figure 3 an extended flow distance out of the valve is obtained, which flow distance is mainly defined by the distance between the edge 32 of the inner diameter of the tube member 12 at the output end 17, and the outer edge 33 of the flange 30. For valves were the tube diameter for the stationary tube member 11 displays a standard size in the range of 10-40 centimetres, the length of said flow distance is within the range of 1-20 centimetres and preferably between 4-10 centimetres, for example 7 centimetres. Naturally, suitable dimensions of the flange 30 are dependent on the air pressure for which the valve is adapted. The flange 30 can be manufactured with an outer diameter 33 which runs outside the spacer bars 21, wherein suitable recesses are formed in the flange 30, in which recesses spacer bars 21 are devised to run during flow regulation.

Thanks to the distance between the limiting surfaces 31 and 19 being essentially parallel, or somewhat tapered towards the outer edge 33, a gradual change in the air pressure occurs wherein the air resistance or turbulence is distributed evenly along the entire flow distance with minimum generation of sound as a consequence. This is valid also for a high flow reduction with minimum flow. The embodiment with a tapered flow distance; i.e. were the distance between the surface 31 of the flange 30 and the surface 19 of the flow reducing device 18 decreases outwardly towards the edge 33, is adapted to counter act the radial volume expansion of the flow zone, were said flow zone consequently relates to the entire zone between the surfaces 31 and 19 in three dimensions. Since the surface of the flow zone between 31 and 19 increases with the square of the radius out towards the edge 33, so does the volume if the limiting surfaces 31 and 19 are parallel. This would mean that the pressure fall would not be entirely evenly distributed between the inner edge 32 and the outer edge 33, but be higher towards the inner edge 32. The angle of the flange 30 against the flow reducing device 18 hence counteracts this phenomena. The angle of the flange 30 towards the damping surface 19 is however relatively acute, preferably within the range of 0-20 °. It is of course also possible to design the flange somewhat curved in relation to the damper surface 19, so that the angle between them decreases from the inner edge 32 to the outer edge 33, at the same time as the distance between the flange 30 and the damper service 19 decreases.

Figure 3 also displays an embodiment of a stationary pressure reducing element 34, arranged at the inner envelope surface of the dynamic tube member 12. Since it is mounted fixed to the dynamic tube member 12 it is in some sense moveable, but not in such a way that its affects on the pressure reduction is varied as a consequence of the position of the dynamic tube member 12 in relation to the flow reducing device 18. In an embodiment were the dynamic tube member 12 is arranged to run outwardly of the stationary tube member 11, the stationary pressure reducing element 34 is of course preferably arranged on the stationary tube member 11. Characterising for the stationary pressure reducing element 34 is that it defines a predetermined narrowing of the inner cross-section area for the conduit 13, or the inner diameter of the conduit 13 in the case the tube 11,12 is cylindrical, over an extended distance in said conduit 13, whereby the "hose effect" according to the above is obtained. In an embodiment adapted for ventilation tubes of standard sizes in the range of 10-40 cm diameter, the stationary pressure reducing element 34 defines an inner cross section area, which is narrowed from the inner cross section area of the tube 11,12. Preferably the cross section area for the stationary pressure reducing element 34 is 10-80 per cent of the inner cross section area of the tube 11,12, over a distance of 5-50 cm. The dimension which is chosen is dependent on the air pressure of the incoming air to the valve, and which maximum pressure it is desired to have out in the room which the valve supplies with air. The stationary pressure reducing element 34 is further preferably rounded at the flange 30 of the dynamic tube member 12, in such a way that the opening 17 of the dynamic tube member 12 towards the flow reducing device 18 increases gradually. Preferably said rounding off displays a radius which is equal to the thickness of the stationary pressure reducing element 34. Furthermore, in this embodiment the flow reducing device 18 is formed such that the surface 19 has a preferably symmetric raised portion 35, wherein the symmetry axis of the raised portion 35 coincides with the longitudinal axis of the dynamic tube member 12. The stationary pressure reducing element 34 preferably formed of a sound isolating material, such as plastic foam.

In one embodiment a sound isolating carpet 36 is also arranged on the surface 19 of the flow reducing device 18. Said carpet includes, in one embodiment, said raised portion 35 which is adapted to enclose the driver means 22 of the actuator, and which is also formed with a suitable tapered tip adapted to the rounding off of the stationary pressure reducing element 34. Preferably the carpet 36 has a radial extension which essentially coincides with the outer edge 33 of the flange 30.

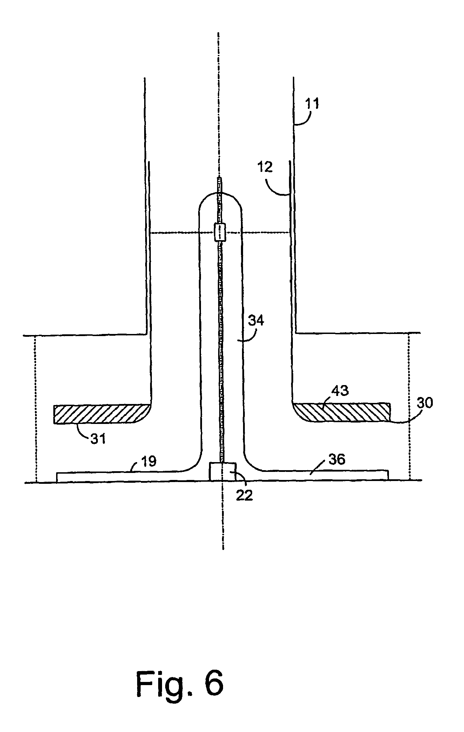

In one embodiment, illustrated in figure 6, the stationary pressure reducing element 34 is instead arranged at the flow reducing device 18, protruding centrally in the conduit 13 and essentially enclosing the driver means 22 and the rod 23. The nut member 24 of the transmission may in this embodiment be arranged above the pressure reducing element 34, or, as illustrated in figure 6, inside. This can be achieved by forming the pressure reducing element 34 in plastic foam or the like, and forming a slot for each fixation bar 25 which makes it possible for the nut member 24 to run in a channel (not shown) under the pressure reducing element 34. Preferably the stationary reducing element 34 is formed with rounded ends according to figure 6, and may be integrated with the isolating carpet 36. In this embodiment the stationary pressure reducing element 34 also forms the raised portion which covers driver means 22, corresponding to the raised portion 35 according to previously described embodiments. Also the pressure reducing element 34 according to the embodiment of figure 6 defines a narrowed inner cross section area in the conduit over an extended portion of the conduit 13, and therefor causes said hose effect.

The pressure reducing element 34 is thus the static correspondent to the flow distance between the surfaces 19 and 31. At a large opening of the valve, i.e. when the dynamic tube member 12 is displaced far into the stationary tube member 11, the extended flow limitation provided by the pressure reducing element 34 will cause a nominal pressure reduction. At increased flow reduction the contribution to the flow reduction of the wing 30, by being moved closer to the flow reducing device 18, will increase and eventually take over. If the stationary pressure reducing element 34 is formed according to the embodiment of figure 6, and also is relatively short in comparison with the distance between the flow reducing device 18 and the stationary tube member 11, the reducing effect which the stationary pressure reducing element 34 has to some extent be dependent of the position for the dynamic tube member 12. One realises though that for a rather extended pressure reducing element 34, for instance were the pressure reducing element 34 is about twice as long as the distance between the flow reducing device 18 and the stationary tube member 11, as illustrated in the figure, the reduction caused therefrom will not be dependent on the position of the dynamic tube member 12 in any significant way, but will only give rise to said nominal reduction. In accornance with the embodiment discussed above the flow reduction caused by the damping of the dynamic tube member 12 towards the flow reducing device 18 will dominate for small valve openings.

The extended flow reducers, comprising a dynamic flow reducer 30 and a static flow reducer 34 are of course separately useable and are both formed for minimum noise generation. In an embodiment were both these are included, such as in figure 3, they will define the margin conditions for the valve. The static flow reducer 34 defines the maximum flow through the valve at a pre-determined air pressure of the air supply into the valve. This is defmed both by the length of the flow reducer 34 and by the inner cross section area defined by it in the conduit 13, and can thereby be designed based upon the existing need. The dynamic flow reducer 30 defines flow reduction upon damping, and its influence of the flow reduction at a certain valve opening, i.e. the position for the dynamic tube member 12 in relation to the flow reducing device 18, is mainly controlled by the length of the flange 30 from the inner edge 32 to the outer edge 33.

Figure 6 also illustrates a detail which in the same way can be combined with any of the embodiments illustrated in figures 3-5, namely an isolation device 43 arranged at the flange 30. This isolation device 43 can be used in combination with the carpet 36 or by itself, and is adapted to provide sound isolation for the flow.

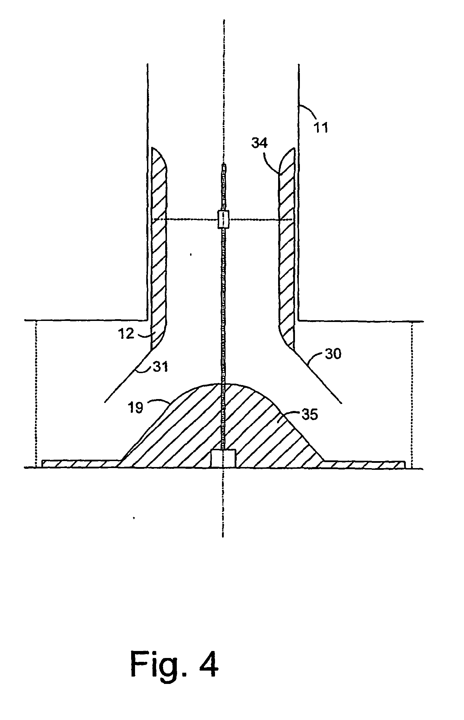

In figure 4 an alternative embodiment of the invention is shown, having large similarities with the embodiment of figure 3. However, the solution according to figure 4 differs in the way that the flow reducing flange 30 is devised with an opening angle towards the dynamic tube member 12, which opening angle differs from 90°, so that the output opening 17 forms a funnel with gradually increasing opening. The raised portion 35 on the flow reducing device 18 is further formed in a corresponding way, so that parallelism or a certain angle according to what has been described with reference to figure 3, remains between the damper surface 19 of the flow reducing device 18 and the damper surface 31 of the flange 30.

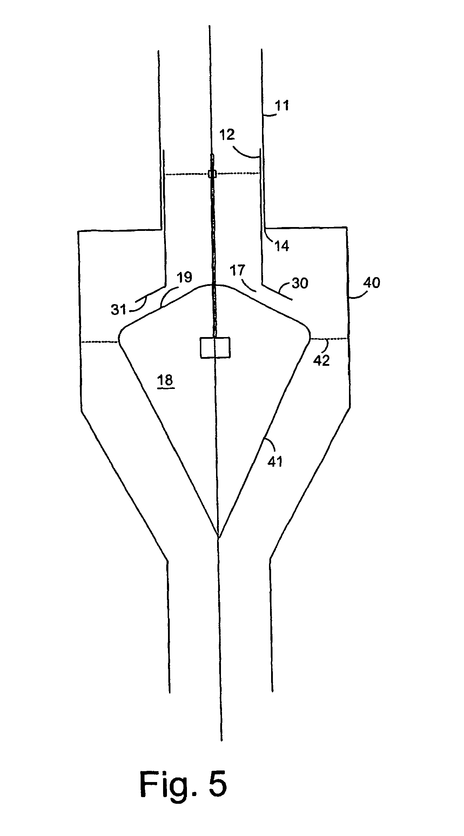

The valve according to the present invention, as embodied in figures 2-4 may advantageously be arranged in the ceiling of a room. The valve is then devised such that the stationary tube member 11 is arranged in a hole in the ceiling such that the mounting flange 20 is arranged in parallel with and on the inside of the ceiling. A valve according to the present invention may however also be used for flow regulation in tubes, wherein no or very little generation of sound occurs. Figure 5 shows a valve were a second tube 40 is devised tightly to the output end 14 of the stationary tube member 11. In the embodiment illustrated in figure 5 the flow reducing device 18 has a surface 19 which is parallel or devised with a certain angle in the previously described manner, with the flange 30 of the dynamic tube member 12. The flow reducing device 18 also has a second surface 41 facing away from the dynamic tube member 12. In figure 5 this second surface 41 of the flow reducing device 18 is conically tapered in the direction away from the dynamic tube member 12. This surface 41 may however be formed in any other suitable way in order to fit to the second tube 40. If the tube 40 is straight instead of tapered, the second surface 41 of the flow reducing device 18 may for instance have a cylindrical shape. As is suggested by the figure the flow reducing device is preferably mounted to the second tube 40 with a suspension device 42 including a couple of discrete suspension elements devised not to hinder or disturb the air flow.

The arrangement of the flange 30 and the flow reducing device 18 is in the embodiment of figure 5 similar to that of figure 4, with a funnel shaped increasing output opening 17. One realises however that an arrangement according to figure 3 could also be used. Furthermore it is possible to adapted the embodiment according to figure 5 to the pure embodiment according to figure 2, that is without the extending flange 30. In such case one will still achieve the advantage of the flow regulation not having to be performed while exercising work against the air pressure. Furthermore, the construction according to figure 5 can of course be supplemented with the static flow reducer 34, or be used without it.

In an alternative embodiment to that of figure 5, the transition between the tubes is applied at an angle. For such an angled embodiment the surface 19 basically constitutes the end surface of the conduit 13 of the tube 11,12. The second tube 40 joint to a tube 11,12 is in this embodiment devised to extend sideways from the opening 17 of the valve. With reference to figure 5 the tube 40 would then run essentially horizontally, or at some other angle, outwardly in one or both directions from the valve. The tube 40 then engages the valve at the lower end 14 of the stationary tube member, and at the damper surface 19, for example were a suspension device 42 is illustrated in figure 5. The driver means of the actuator in such an embodiment may be arranged on the inside of the end surface 19 of the conduit 13, or on the outside, with the recess made in the end surface 19 for the transmission rod 23.

The embodiments having an extended flow reduction, embodied with the flange 30 and or the static reducer 34, results in the air pressure being reduced gradually, wherein the air resistance or turbulence is evenly distributed along the entire flow distance, whereby generation of sound is reduced to a minimum. As a consequence thereof the valve is capable of reducing and cutting off flows with an applied air pressure of more than 100 Pa. Thanks to the flow out from the valve not being impaired by the same turbulence effect as for valves according to the prior art, the valve according to the present invention is capable of spreading cooled air of down to 15°C along the ceiling with a throw of up to 1.5 meter. The flow is preferably controlled dependent on the needs from only a few 1/s to more than 70 l/s, for example by means of sensors adapted to sense temperature, amount of CO₂, and so on. The invention may thus be formed to manage ventilation adapted to the needs for the entire present existence of office premises, schools and so on, as well as all new production. It has therefor the qualifications to constitute an important component in a system solution for substantial reduction of the energy need for the future.

In one embodiment of the invention, the valve is a devised as a fire damper. The fire damper according to the invention may be arranged at the output in a room, i.e. the fire damper function is combined with the function of a supply air terminal as illustrated in e.g. figs 2 - 4 or 6. In an alternative embodiment, the fire damper is located intermediate two tubes or pipes 11 and 40 as illustrated in figure 5. The benefit of a fire damper construction according to the invention is that it is closed without acting towards the pressure of the air or gas inside the tube 11,12 of the valve. This means that closing can be effected very fast and without having to use a actuator more powerful than what is needed for normal flow control. A proper sealing has to be provided between the stationary tube 11 and the dynamic tube 12, e.g. as disclosed above using an intermediate o-ring, and between the orifice of the output end 17 of the dynamic tube 12 and the corresponding portion of the flow reducing device 18. Numerous ways to implement such a sealing are conceivable.

The combined flow regulating supply air terminal and fire damper according to the present invention thus provides a solution having less power consumption, and which is also both more efficient and less space demanding than prior art valves.

It should however be noted that the valve construction according to the present invention is not limited to the regulation of air flows, but is also usable for any other gas. It is also apparent that the examples of dimensions given are not to be interpreted as limiting, but merely as examples in order to clarify the description. A person skilled in the art further realises that even though not illustrated in the drawings several of the described embodiments may be combined in different ways within the scope of the appended claims.

## Claims

1. Valve for variable flows, comprising a tube (11,12) with an input end (15) and an output end (17), a flow reducing device (18) having a damper surface (19) facing said output end (17) for regulation of the air flow through said tube (11,12), an actuator for variable setting of the distance between the surface (19) of the flow reducing device (15) and said output end (17), **characterised in that** the tube (11,12) comprises a dynamic tube member (12) having open ends (16,17), which is displaceably arranged concentrically with a stationary tube member (11), wherein said actuator is devised to displace said dynamic tube member (12) along the stationary tube member (11) for regulation of the distance between said output opening (17) and said damper surface (19).

2. The valve according to claim 1, **characterised in that** said flow reducing device is fixed at a distance from said stationary tube member

3. The valve according to claim 1, **characterised in that** said flow reducing device (18) is devised with spacer bars (21) on a fixed distance from said stationary tube member (11).

4. The valve according to any of the previous claims, **characterised in that** the actuator (4) comprises driver means (22) and a transmission (23,24,25) devised to transform a moment in said driver means (22) into an axial displacement of said dynamic tube member (12) in relation to the stationary tube member (11).

5. The valve according to claim 4, **characterised in that** said driver means (22) is arranged at said flow reducing device (18), and that said transmission (23,24,25) links the driver means (22) with said dynamic tube member (12).

6. The valve according to claim 5, **characterised in that** said transmission (23,24,25) comprises a threaded rod (23) extending in said dynamic tube member (12), which rod (23) is rotateable by means of said driver means (22) and is arranged in threaded engagement with a nut member (24) devised fixed to the dynamic tube member (12), wherein the actuator by means of rotation of the rod is devised for regulation of said axial displacement.

7. The valve according to claim 6, **characterised in that** said nut member (24) is fixed centrally in the dynamic tube member (12) by means of fixation bars (25).

8. The valve according to any of the previous claims, **characterised in that** said driver means (22) comprises a DC engine.

9. The valve according to any of the previous claims, **characterised in that** an isolating carpet (36) is arranged on said surface (19) of the flow reducing device (18) facing the output end (17) of the dynamic tube member (12).

10. The valve according to any of the previous claims, **characterised in that** a stationary pressure reducing element (34), arranged in the inner conduit (13) of the tube (11,12), which stationary pressure reducing element (34) defines a narrowed cross section area over an extended portion over the conduit (13) of the tube (11,12).

11. The valve according to any of the previous claims, **characterised in that** said stationary tube member (11), in its end (14) which is directed towards said output end (17), is devised with a mounting flange (20) devised for mounting towards a surface about a ventilation opening in said surface.

12. The valve according to any of the claims, **characterised in that** said stationary tube member (11), in its end (14) which is directed towards said output end (17) is devised for mounting to a second tube.

13. The valve according to any of the previous claims, **characterised in that** the dynamic tube member (12) has an outer damper flange (30), projecting at said output end (17).

14. The valve according to claim 13, **characterised in that** said damper flange (30) has a flange surface (31) which extends between the edge (32) of the output end (17) of the tube (11,12) and the outer edge (33) of the damper flange (30), wherein a flow distance is formed between said flange surface (31) and said damper surface (19).

15. The valve according to claim 14, **characterised in that** said flange surface (31) and said damper surface (19) are essentially parallel.

16. The valve according to claim 14, **characterised in that** the distance between said flange surface (31) and said damper surface (19) decreases from the edge (32) of the output end (17) towards said outer edge (33).

17. The valve according to any of the previous claims, **characterised in that** said damper surface (19) extends essentially perpendicularly to the axis of the tube (11,12).

18. The valve according to any of the claims, **characterised in that** said damper surface (19) has a partly conical shape along the axis of the tube (11,12), tapered towards said output end (17).

19. The valve according to claim 12, **characterised in that** it is devised for mounting intermediate a first pipe and a second pipe, wherein said tube constitutes said first pipe, and where one end of said stationary tube member directed towards said output end is devised for air tight mounting to said second pipe.

20. The valve according to any of the previous claims, **characterised in that** it is arranged to operate as a fire damper, wherein said actuator is devised to displace said dynamic tube member along the stationary tube member into contact with said damper surface for closing off said output opening.

## Patentansprüche

1. Ventil für veränderliche Durchflüsse, umfassend ein Rohr (11, 12) mit einem Eingangsende (15) und einem Ausgangsende (17), eine Durchflussreduziereinrichtung (18) mit einer Dämpfungsoberfläche (19), die zu dem Ausgangsende (17) hinweist, zur Regulierung des Luftstromes durch das Rohr (11, 12), ein Betätigungselement zum variablen Einstellen des Abstandes zwischen der Oberfläche (19) der Durchflussreduziereinrichtung (15) und dem Ausgangsende (17), **dadurch gekennzeichnet, dass** das Rohr (11, 12) ein dynamisches Rohrelement (12) umfasst, das offene Enden (16, 17) besitzt, das verschiebbar konzentrisch mit einem stationären Rohrelement (11) angeordnet ist, wobei das Betätigungselement vorgesehen ist, um das dynamische Rohrelement (12) zur Regulierung des Abstandes zwischen der Ausgangsöffnung (17) und der Dämpfungsoberfläche (19) entlang des stationären Rohrelementes (11) zu verschieben.

2. Ventil gemäß Anspruch 1, **dadurch gekennzeichnet, dass** die Durchflussreduziereinrichtung von dem stationären Rohrelement beabstandet befestigt ist.

3. Ventil gemäß Anspruch 1, **dadurch gekennzeichnet, dass** die Durchflussreduziereinrichtung (18) in einem feststehenden Abstand von dem stationären Rohrelement (11) mit Stangen (21) versehen ist.

4. Ventil gemäß einem der vorhergehenden Ansprüche, **dadurch gekennzeichnet, dass** das Betätigungselement (4) Antriebsmittel (22) und eine Übersetzung (23, 24, 25) umfasst, die zum Umwandeln eines Momentes im Antriebsmittel (22) in eine Axialverschiebung des dynamischen Rohrelementes (12) in Bezug auf das stationäre Rohrelement (11) ausgebildet ist.

5. Ventil gemäß Anspruch 4, **dadurch gekennzeichnet, dass** das Antriebsmittel (22) an der Durchflussreduziereinrichtung (18) angeordnet ist, und dass die Übersetzung (23, 24, 25) das Antriebsmittel (22) mit dem dynamischen Rohrelement (12) verbindet.

6. Ventil gemäß Anspruch 5, **dadurch gekennzeichnet, dass** die Übersetzung (23, 24, 25) eine Gewindestange (23) umfasst, die sich in das dynamische Rohrelement (12) erstreckt, wobei die Stange (23) mit Hilfe des Antriebsmittels (22) drehbar und mit einem Schraubenmutterelement (24) schraubverbunden angeordnet ist, das feststehend am dynamischen Rohrelement (12) vorgesehen ist, wobei das Betätigungselement zur Regulierung der Axialverschiebung mittels Drehen der Stange ausgebildet ist.

7. Ventil gemäß Anspruch 6, **dadurch gekennzeichnet, dass** das Schraubenmutterelement (24) mit Hilfe von Befestigungsstangen (25) mittig in dem dynamischen Rohrelement (12) befestigt ist.

8. Ventil gemäß einem der vorhergehenden Ansprüche, **dadurch gekennzeichnet, dass** das Antriebsmittel (22) einen Gleichstrommotor umfasst.

9. Ventil gemäß einem der vorhergehenden Ansprüche, **dadurch gekennzeichnet, dass** auf der Oberfläche (19) der Durchflussreduziereinrichtung (18) ein Isolierteppich (36) angeordnet ist, der zum Ausgangsende (17) des dynamischen Rohrelementes (12) hinweist.

10. Ventil gemäß einem der vorhergehenden Ansprüche, **dadurch gekennzeichnet, dass** in dem Innenrohr (13) des Rohres (11, 12) ein stationäres Druckreduzierelement (34) angeordnet ist, wobei das stationäre Druckreduzierelement (34) eine verengte Querschnittsfläche über einen verlängerten Abschnitt der Rohrleitung (13) des Rohres (11, 12) umgrenzt.

11. Ventil gemäß einem der vorhergehenden Ansprüche, **dadurch gekennzeichnet, dass** das stationäre Rohrelement (11) an seinem Ende (14), das zu dem Ausgangsende (17) gerichtet ist, mit einem Befestigungsflansch (20) versehen ist, der zum Montieren auf eine Fläche um eine Belüftungsöffnung in der Fläche herum vorgesehen ist.

12. Ventil gemäß einem der Ansprüche, **dadurch gekennzeichnet, dass** das stationäre Rohrelement (11) an seinem Ende (14), das zu dem Ausgangsende (17) gerichtet ist, zum Befestigen eines zweiten Rohres ausgebildet ist.

13. Ventil gemäß einem der vorhergehenden Ansprüche, **dadurch gekennzeichnet, dass** das dynamische Rohrelement (12) einen äußeren Dämpfungsflansch (30) besitzt, der an dem Ausgangsende (17) hervorsteht.

14. Ventil gemäß Anspruch 13, **dadurch gekennzeichnet, dass** der Dämpfungsflansch (30) eine Flanschoberfläche (31) besitzt, die sich zwischen dem Rand (32) des Ausgangsendes (17) des Rohres (11, 12) und dem Außenrand (33) des Dämpfungsflansches (30) erstreckt, wobei zwischen der Flanschoberüäche (31) und der Dämpfungsoberfläche (19) ein Strömungsabstand ausgebildet ist.

15. Ventil gemäß Anspruch 14, **dadurch gekennzeichnet, dass** die Flanschfläche (31) und die Dämpfungsoberfläche (19) im Wesentlichen parallel sind.

16. Ventil gemäß Anspruch 14, **dadurch gekennzeichnet, dass** der Abstand zwischen der Flanschoberfläche (31) und der Dämpfungsoberfläche (19) von dem Rand (32) des Ausgangsendes (17) zum Außenrand (33) hin abnimmt.

17. Ventil gemäß einem der vorhergehenden Ansprüche, **dadurch gekennzeichnet, dass** sich die Dämpfungsoberfläche (19) im Wesentlichen senkrecht zur Achse des Rohres (11, 12) erstreckt.

18. Ventil gemäß einem der Ansprüche, **dadurch gekennzeichnet, dass** die Dämpfungsoberfläche (19) eine teilweise konische Form entlang der Achse des Rohres (11, 12) besitzt, die sich zum Ausgangsende (17) hin verjüngt.

19. Ventil gemäß Anspruch 12, **dadurch gekennzeichnet, dass** es zur Befestigung zwischen einem ersten Leitungsrohr und einem zweiten Leitungsrohr ausgebildet ist, wobei das Rohr das erste Leitungsrohr bildet und wobei ein Ende des zum Ausgangsende hin ausgerichteten stationären Rohrelementes zur luftdichten Befestigung am zweiten Leitungsrohr ausgebildet ist.

20. Ventil gemäß einem der vorhergehenden Ansprüche, **dadurch gekennzeichnet, dass** es angeordnet ist, als Brandschutzklappe zu fungieren, wobei das Betätigungselement ausgebildet ist, das dynamische Rohrelement entlang des stationären Rohrelementes in Kontakt mit der Dämpfungsoberfläche zu bringen, um die Ausgangsöffnung zu verschließen.

## Revendications

1. Clapet pour écoulements variables, comprenant un tube (11,12) pourvu d'une extrémité d'entrée (15) et d'une extrémité de sortie (17), un dispositif (18) de réduction d'écoulement comportant une surface de registre (19) en vis-à-vis de ladite extrémité de sortie (17) pour la régulation de l'écoulement d'air dans ledit tube (11,12), un actionneur pour régler d'une manière variable la distance entre la surface (19) du dispositif de réduction d'écoulement (15) et ladite extrémité de sortie (17), **caractérisé en ce que** le tube (11,12) comprend un élément de tube dynamique (12) possédant des extrémités ouvertes (16,17), qui sont disposées, de manière à être déplaçables, concentriquement à un élément de tube fixe (11), et **en ce que** ledit actionneur est conçu pour déplacer ledit élément de tube dynamique (12) le long de l'élément de tube fixe (11) pour régler la distance entre ladite ouverture de sortie (17) et ladite surface de registre (19).

2. Clapet selon la revendication 1, **caractérisé en ce que** ledit dispositif de réduction d'écoulement est fixé à une distance dudit élément de tube fixe.

3. Clapet selon la revendication 1, **caractérisé en ce que** ledit dispositif de réduction d'écoulement (18) est réalisé avec des entretoises d'écartement (21) sur une distance fixe à partir dudit élément de tube fixe (11).

4. Clapet selon l'une quelconque des revendications précédentes, **caractérisé en ce que** l'actionneur (4) comprend des moyens d'entraînement (22) et une transmission (23,24,25) conçue pour transformer un moment dans lesdits moyens d'entraînement (22) en un déplacement axial dudit élément de tube dynamique (12) par rapport audit élément de tube fixe (11).

5. Clapet selon la revendication 4, **caractérisé en ce que** lesdits moyens d'entraînement (22) sont disposés au niveau dudit dispositif de réduction d'écoulement (18) et que ladite transmission (23,24,25) relie les moyens d'entraînement (22) audit élément de tube dynamique (12).

6. Clapet selon la revendication 5, **caractérisé en ce que** ladite transmission (23, 24, 25) comprend une tige filetée (23) qui s'étend dans ledit élément de tube dynamique (12), laquelle tige (23) pouvant être entraînée en rotation au moyen desdits moyens d'entraînement (22) et est agencée pour coopérer avec le filetage d'un élément formant écrou (24) monté de façon fixe sur l'élément de tube dynamique (12), dans lequel l'actionneur au moyen d'une rotation de la tige est conçu pour la régulation dudit déplacement axial.

7. Clapet selon la revendication 6, **caractérisé en ce que** ledit élément formant écrou (24) est fixé d'une manière centrale dans l'élément de tube dynamique (12) au moyen de barres de fixation (25).

8. Clapet selon l'une quelconque des revendications précédentes, **caractérisé en ce que** lesdits moyens d'entraînement (22) comprennent un moteur à courant continu.

9. Clapet selon l'une quelconque des revendications précédentes, **caractérisé en ce qu'**un tapis isolant (36) est disposé sur ladite surface (19) du dispositif de réduction d'écoulement (18), en vis-à-vis de l'extrémité de sortie (17) de l'élément de tube dynamique (12).

10. Clapet selon l'une quelconque des revendications précédentes, **caractérisé en ce qu'**un élément fixe de réduction de pression (34) est disposé dans le conduit intérieur (13) du tube (11,12), lequel élément fixe de réduction de pression (34) définit une surface en coupe transversale rétrécie sur une partie étendue le long du conduit (13) du tube (11,12).

11. Clapet selon l'une quelconque des revendications précédentes, **caractérisé en ce que** ledit élément de tube fixe (11) est équipé, dans son extrémité (14) qui est tournée vers ladite extrémité de sortie (17), d'une bride de montage (20) conçue pour le montage sur une surface autour d'une ouverture de ventilation dans ladite surface.

12. Clapet selon l'une quelconque des revendications, **caractérisé en ce que** ledit élément de tube fixe (11) est équipé, dans son extrémité (14) qui est tournée vers ladite extrémité de sortie (17), pour être monté sur un second tube.

13. Clapet selon l'une quelconque des revendications précédentes, **caractérisé en ce que** l'élément de tube dynamique (12) possède une bride extérieure de registre (30) qui fait saillie au niveau de ladite extrémité de sortie (17).

14. Clapet selon la revendication 13, **caractérisé en ce que** ladite bride de registre (30) possède une surface de bride (31) qui s'étend entre le bord (32) de l'extrémité de sortie (17) du tube (11,12) et le bord extérieur (33) de la bride de registre (30), une distance d'écoulement est formée entre ladite surface de bride (31) et ladite surface de registre (19).

15. Clapet selon la revendication 14, **caractérisé en ce que** ladite surface de bride (31) et ladite surface de registre (19) sont essentiellement parallèles.

16. Clapet selon la revendication 14, **caractérisé en ce que** la distance entre ladite surface de bride (31) et ladite surface de registre (19) diminue depuis le bord (32) de l'extrémité extérieure (17) en direction dudit bord extérieur (33).

17. Clapet selon l'une quelconque des revendications précédentes, **caractérisé en ce que** ladite surface de registre (19) s'étend sensiblement perpendiculairement à l'axe du tube (11,12).

18. Clapet selon l'une quelconque des revendications, **caractérisé en ce que** ladite surface de registre (19) possède une forme partiellement conique le long de l'axe du tube (11,12), qui se rétrécit en direction de ladite extrémité de sortie (17).

19. Clapet selon la revendication 12, **caractérisé en ce qu'**il est conçu pour être monté entre une première canalisation et une seconde canalisation, dans lequel ledit tube constitue ladite première canalisation, et où une extrémité dudit élément de tube fixe dirigée vers ladite extrémité de sortie est conçue pour être montée d'une manière étanche à l'air sur ladite seconde canalisation.

20. Clapet selon l'une quelconque des revendications précédentes, **caractérisé en ce qu'**il est agencé de manière à fonctionner en tant que registre coupe-feu, dans lequel ledit actionneur est conçu pour déplacer ledit élément de tube dynamique le long de l'élément de tube fixe jusqu'au contact avec ladite surface de registre pour fermer ladite ouverture de sortie.
